Europäisches Patentamt

European Patent Office

Office européen des brevets

(11) Publication number: **0 113 214**
**A1**

## (12) EUROPEAN PATENT APPLICATION

(21) Application number: **83307539.3**

(22) Date of filing: **12.12.83**

(51) Int. Cl.³: **F 16 D 55/224**

(30) Priority: **23.12.82 GB 8236707**

(43) Date of publication of application:
**11.07.84 Bulletin 84/28**

(84) Designated Contracting States:
**BE DE FR GB IT SE**

(71) Applicant: AUTOMOTIVE PRODUCTS PUBLIC LIMITED
COMPANY
Tachbrook Road
Leamington Spa Warwickshire CV31 3ER(GB)

(72) Inventor: Joynes, Brian
14 Crossfield Road
Warwick Warwickshire, CV34 5HU(GB)

(72) Inventor: Bunker, Kenneth James
19 Stanbridge Road Tilsworth
Leighton Buzzard Bedfordshire(GB)

(74) Representative: Farrow, Robert Michael
Patent Department Automotive Products plc Tachbrook
Road
Leamington Spa Warwickshire CV31 3ER(GB)

(54) Disc brakes.

(57) A disc brake comprises a cast aluminium fixed support 11 having bridge members 18 extending across the periphery of disc 19 to provide support for friction pads on both sides of the disc. The brake incorporates the usual caliper 26 for engaging the pads against the disc to provide braking action. Reaction forces of the pads such as 17 are transmitted through their backing plates such as 16 to wear resistant stainless steel inserts 15 which are cast in to the casting constituting fixed support 11. Two inserts may originate as a common pressing on both sides of the disc, a bridge which unites the inserts during the casting operation being removed subsequently.

EP 0 113 214 A1

FIG 1

## "DISC BRAKES"

This invention relates to disc brakes, particularly but not exclusively for braking the road wheels of automobiles.

A typical disc brake incorporates a fixed support, two friction pads supported against brake reaction forces by abutment against the fixed support and means such as a caliper for urging the pads into frictional contact with a disc running therebetween. Particularly when the fixed support is made from lightweight material such as cast aluminium and the friction pads are of the conventional structure incorporating friction material supported on a steel backing plate, there is a tendency for the pads to wear the abutment surface irregularly. This can impair smooth action of the brakes because the pads have to move slightly across the abutment surface as braking effort is applied and released. To avoid this kind of difficulty it is particularly important to have a smooth flat abutment surface on the fixed support for the brake reaction forces from the pads. It has already been proposed in British patent Specification GB 2093935A to provide a wear resistant insert against which the pads bear and to locate the insert against a flat surface of the fixed support by resilient lugs integral with the insert and engaging with carefully shaped and dimensioned apertures and other surfaces. The surface of the fixed support itself behind the insert also requires accurate machining.

According to the present invention there is provided a disc brake comprising a cast metal fixed support, friction pads arranged to be supported against brake reaction forces by abutment against the fixed support and means for urging the pads into frictional engagement with a disc between the pads wherein the fixed support is provided with cast in inserts of a material which is more wear resistant than the support itself against which inserts the pads bear for transmission of brake reaction forces to the fixed support. The fixed support may be of a light metal such as aluminium and the inserts may be of steel, preferably stainless steel pressings.

It is important to ensure that bearing faces of the inserts are accurately positioned so that they provide the required flat face which should normally be parallel to the direction of pad movement. Pad movement is only a few millimetres and as space available is limited, the inserts have to be small, typically with major dimensions between 10 and 20 millimetres. Establishing and maintaining accurate alignment of such small inserts during a casting operation can be particularly difficult in mass production and a further objective is to provide an arrangement whereby sufficiently accurate alignment is facilitated.

To achieve this latter objective, it is preferable that two inserts, one to each side of the disc, are initially formed as a single element of the two inserts joined by a bridge, wherein the element is cast into the fixed

0113214

support with the bridge traversing a region required for passage of the disc and wherein the bridge is removed after the casting has been completed.

The invention also extends to a method of providing two wear resistant inserts as friction pad abutments in a fixed support for a disc brake including the steps of forming the two inserts and a bridge as a single element, forming the fixed support as a casting with the element cast into it and subsequently removing the bridge.

An embodiment of the invention will now be described with reference to the accompanying drawings in which:-

Fig. 1 is a side elevation of a disc brake with parts broken away and shown in section;

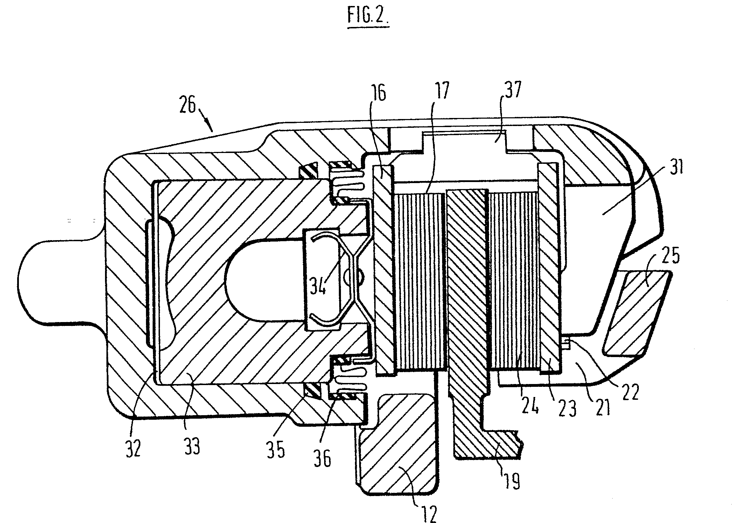

Fig. 2 is a section on line II-II of Fig. 1;

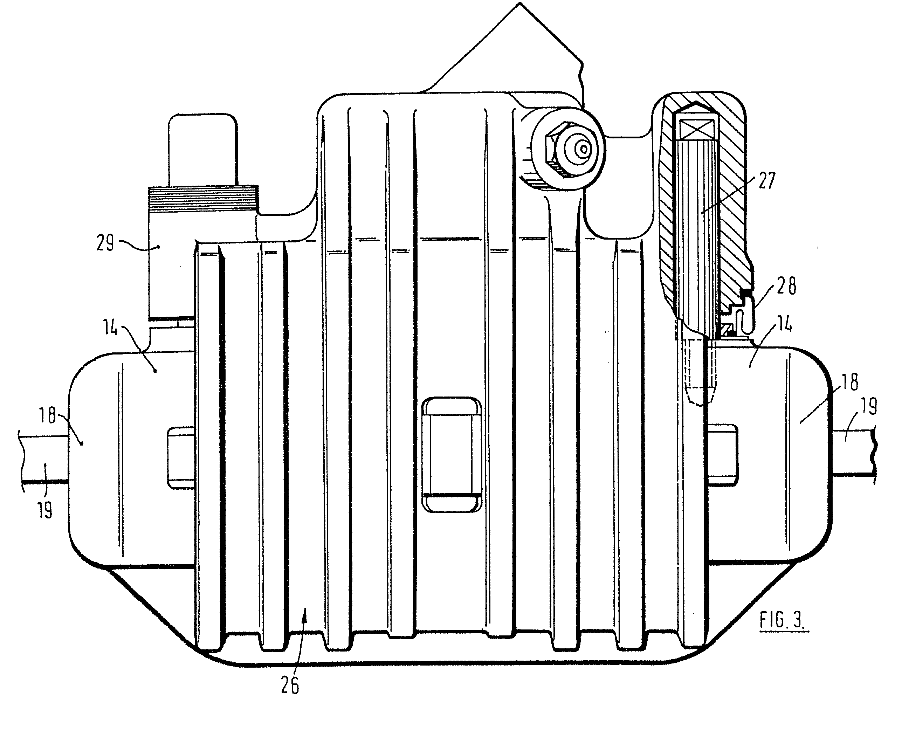

Fig. 3 is a plan view of the brake shown in Figs. 1 and 2; and

Fig. 4 is a perspective view of an element constituting two inserts for incorporation into the brake of Figs. 1 to 3.

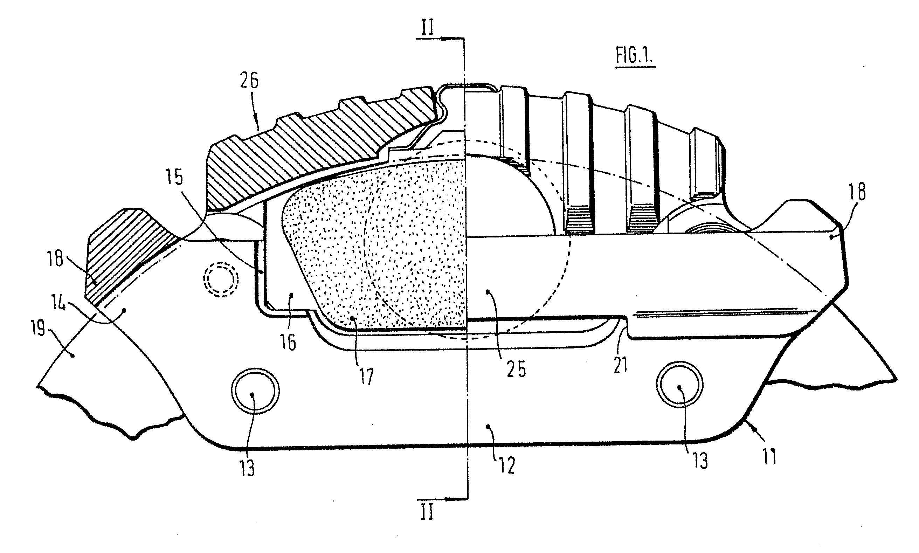

The brake shown in Fig. 1 incorporates a cast aluminium fixed support 11. The fixed support incorporates a generally U-shaped portion, the base 12 of which incorporates two mounting holes 13 and two upwardly extending limbs 14 of which carry wear resistant inserts 15. Inserts 15 provide wear resistant abutments for the ends of steel backing plate 16 of friction pad 17. Limbs 14 also carry, as an integral part of the fixed support casting 11, bridge members 18 which extend laterally from the upper outer ends of limbs 14 outside a space provided for a brake disc 19 to the second major part of the fixed support which lies on the opposite side of the disc from the limbs 14. This latter part of the fixed support comprises abutment regions 21 carrying wear resistant inserts 22 for the back plate 23 of a second brake pad 24. In order to provide a high degree of stiffness in conjunction with low weight and compactness, the two abutment regions 21 are joined by a beam 25, also forming an integral part of the fixed support casting.

The brake also incorporates a caliper 26 which is constituted primarily by an aluminium casting. Caliper 26 is guided for sliding movement in a direction parallel to the axis of disc 19 by means of two guide pins 27 which are carried by screw threads in the fixed support 11. Flexible seals such as 28 prevent the ingress of dirt into the sliding surfaces. Only one pin 27 is shown, the other being housed within a boss 29 and having provision for differential thermal expansion between the two castings and for removal to allow friction pad replacement.

The caliper 26 extends around the outer periphery of the disc 19. At one side of the disc it has a supporting bracket 31 for engagement with the back plate 23 of pad 24. At the opposite side of the disc, the caliper incorporates a hydraulic cylinder 32 which carries a piston 33 which in turn bears against back plate 16 of friction pad 17 through a clip 34. The cylinder is provided with a hydraulic seal 35 and a dust seal 36. The caliper is also provided with a hold-down clip 37 which engages the pad back plates and assists in holding them in position.

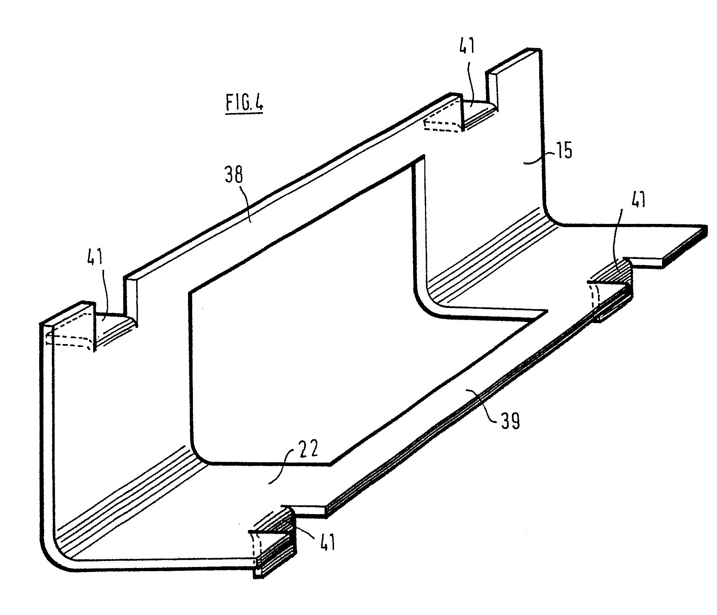

The two wear resistant inserts 15 and 22 at each end of the two back plates, making four wear resistant inserts in all, are stainless steel pressings which have been cast integrally with the fixed support casting. Further details of the inserts and of the way in which they are installed accurately in the desired position will now be described with reference to Fig. 4. Fig. 4 shows a stainless steel pressing which incorporates two wear resistant inserts 15 and 22 joined by a bridge constituted by two arms 38 and 39 so as to form a single element. Each insert is made up of two flat faces at right angles to each other and each face incorporates a location lug 41 formed by slitting and bending out a portion of the edge.

The arms 38 and 39 are provided merely to assist with the manufacturing process of the brake and as will be described, they form no part of the completed brake. In order to produce the fixed support 11 complete with bearing inserts, the complete element shown in Fig. 4 is first of all installed in a mould cavity within which the fixed support casting is to be poured. Because it is a relatively large element and the mould cavity has well spaced out clearly defined surfaces on which the two inserts 15 and 22 can be located, the element as a whole can be located very accurately. In particular, the abutment faces remain accurately parallel with each other because they are parts of the same element and they can be placed in a position which will correspond accurately with an axial direction relative to the disc in the completed brake. It will normally be necessary to preheat the insert but this will depend on casting techniques. The mould cavity is then closed and the casting is poured in the usual way. When the casting has solidified, it is removed from the mould.

For mass produced quantities, the casting technique employed will normally be die-casting, in which case the fixed support can be cast to sufficiently close tolerances to require little or no machining. For small production runs, sand casting may be more economic.

Before the casting is ready for use as part of a brake, it is necessary to remove the arms 38 and 39. With a die-casting, it might be desirable to weaken the roots of the arms 38 and 39 where they join the inserts 15 and 22 prior to the casting operation and in that case it may be possible simply to knock out the arms 38 and 39. With a sand casting, it is to be expected that some casting material would tend to bridge the slot intended for the disc 19 and across which the arms 38 and 39 extend and in such a case it may be necessary to resort to machining to remove both the arms 38 and 39 and undesired material produced in the casting operation.

In either case, the result is a fixed support for the brake which has accurately defined wear resistant abutment surfaces for the brake pads.

In use of the brake, it is typically installed in an upright rather than the horizontal position shown, that is with one of the mounting holes 13 directly above the other. During brake applications caused by pressurizing the hydraulic cylinder 32, the pads move into firm engagement with the disc and rotation of the disc causes the pads to abut against one pair or wear resistant inserts, depending on the direction of disc rotation. The wear resistant inserts remain flat and accurately in position despite the loads applied to their abutment faces by the pads and the transverse movement of the pads. This arrangement contributes to effective smooth brake operation over a long period of time.

Reference throughout this description and in the appended claims to a fixed support is intended to mean a support which is fixed in relation to the axis of rotation of a disc to be braked. The disc may for example be mounted on a stub axle carrier for an automobile wheel and thus be movable with the vehicle suspension.

**0113214**

CLAIMS

1.      A disc brake comprising a cast metal fixed support (11), friction pads (17,24) arranged to be supported against brake reaction forces by abutment against the fixed support and means (26, 32, 33) for urging the pads into frictional engagement with a disc (19) between the pads characterised in that the fixed support is provided with cast in inserts (15, 22) of a material which is more wear resistant than the support itself against which inserts the pads bear for the transmission of brake reaction forces to the fixed support.

2.      A disc brake as claimed in claim 1 characterised in that the fixed support (11) is made of a light metal and the wear resistant inserts (15, 22) are of steel.

3.      A disc brake as claimed in claim 2 characterised in that the wear resistant inserts (15, 22) are of stainless steel.

4.      A disc brake as claimed in any one of the preceding claims characterised in that each insert (15, 22) is a metal pressing having lugs (41) bent out from its surface to assist in holding the insert in position.

5.      A disc brake as claimed in any preceding claim characterised in that two inserts (15, 22), one to each side of the disc, are initially formed as a single element (Figure 4) of the two inserts joined by a bridge (38, 39), wherein said element is cast into the fixed support with the bridge traversing a region required for passage of the disc, and wherein the bridge is removed after the casting is complete.

6.      A disc brake as claimed in claim 5 characterised in that the bridge (38, 39) incorporates weakened regions at its junctions with the inserts and is removed by breaking away.

7.      A disc brake as claimed in claim 5 characterised in that the bridge is removed by machining.

8.      A method of providing two wear resistant inserts (15, 22) as friction pad abutments in a fixed support (11) for a disc brake including the steps of forming the two inserts and a bridge (Figure 4) as a single element, forming the fixed support (11) as a casting with the element cast into it and subsequently removing the bridge.

FIG.1.

FIG.2.

FIG. 3.

FIG.4

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | GB-A-2 071 240  (TOKICO) <br> * Figures 2-4 * | 1-4 | F 16 D  55/224 |
| Y,A | DE-A-2 950 660  (TEVES) <br> * Claims 6-8; figures 1-4 * | 1-4 | |
| D,A | GB-A-2 093 935  (NISSIN) | | |

---

TECHNICAL FIELDS
SEARCHED (Int. Cl. ³)

F 16 D  55/00

The present search report has been drawn up for all claims

| Place of search <br> BERLIN | Date of completion of the search <br> 24-02-1984 | Examiner <br> LUDWIG H J |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03.82